# EUROPÄISCHE PATENTSCHRIFT

(11) **EP 0 814 296 B1**
(45) Veröffentlichungstag und Bekanntmachung des Hinweises auf die Patenterteilung: **10.01.2001**
(21) Anmeldenummer: 97109721.7
(22) Anmeldetag: 14.06.1997
(51) Int. Cl.: F16L 55/10

(54) **Einfriervorrichtung für flüssigkeitsgefüllte Rohrleitungen**
Freezing device for pipes filled with fluid
Dispositif pour la congélation de tuyaux contenant un fluide

(30) Priorität: 19.06.1996 DE 19624462; 14.03.1997 DE 19710566
(43) Veröffentlichungstag der Anmeldung: 29.12.1997
(73) Patentinhaber: Rothenberger Werkzeuge AG, 60327 Frankfurt (DE)
(72) Erfinder: Fuhr, Jürgen, 65779 Kelkheim (DE); Herrgen, Rudolf, 42929 Wermelskirchen (DE); Nolte, Michael, 65779 Kelkheim-Fischbach (DE); Weber, Thilo, 61184 Karben (DE)
(74) Vertreter: Zapfe, Hans, Dipl.-Ing.

(56) Entgegenhaltungen:
- EP-A- 0 145 114
- DE-A- 3 903 009
- DE-A- 4 305 785

## Beschreibung

Die Erfindung betrifft eine Einfriervorrichtung für flüssigkeitsgefüllte Rohrleitungen mittels eines in einem Kreislauf geführten verdampfbaren Kältemittels mit einem Kontaktkörper, der eine teilzylindrische Kontaktfläche für die Rohrleitung oder für einen Adapter und strömungstechnisch in Reihe geschaltete Expansionskammern für die Verdampfung des Kältemittels aufweist, wobei ein Schlauch für die Abfuhr des verdampften Kältemittels an den Kontaktkörper angeschlossen ist und wobei eine Kapillarleitung für die Zufuhr flüssigen Kältemittels durch den Schlauch in den Kontaktkörper geführt ist.

Eine derartige Einfriervorrichtung, die durch die EP 0 145 114 B1 bekannt ist und zwei parallele Expansionskammern aufweist, die durch eine Querbohrung miteinander verbunden sind, wird bei Reparaturen an wassergefüllten Heizungskreisläufen in der Regel mit paarweise vorgesehenen Kontaktkörpern dazu eingesetzt, einen zwischen den Kontaktkörpern liegenden Leitungsabschnitt durch die Bildung von Eispfropfen abzusperren, um beispielsweise ein Ventil oder einen Heizkörper austauschen zu können, ohne den gesamten Kreislauf entleeren zu müssen. Der Raum für die Anbringung der Kontaktkörper ist meist eng begrenzt, weil entweder der freiliegende Leitungsabschnitt sehr kurz ist und/oder in einer Raumecke oder einer Raum- oder Fensternische liegt.

Der bekannte Kontaktkörper besitzt fertigungsbedingt drei eingeschraubte Verschlußstopfen, ist sehr groß ausgebildet und besitzt zwei alternativ einsetzbare, etwa halbzylindrische Kontaktflächen für die Rohrleitung oder für einen Adapter, deren Achsen im rechten Winkel zueinander stehen, ohne sich zu schneiden. Der relativ steife Schlauch mündet koaxial in die Stirnwand der einen Expansionskammer, ggf. unter Zwischenschaltung eines starren Rohrkrümmers. Beim Ansatz der einen Kontaktfläche an einen waagrechten Leitungsabschnitt hängt der Schlauch senkrecht an dem Leitungsabschnitt, was für die Handhabung günstig ist. Hierbei verlaufen jedoch die Achsen der beiden parallelen Expansionskammern senkrecht zur Kontaktfläche. Die Wärmeabfuhr erfolgt also überwiegend durch die kleinen Stirnflächen der Expansionskammern, während die sehr viel gößeren Zylinderflächen größtenteils im Wärmeaustausch mit der Umgebungsluft stehen, so daß sich der Wirkungsgrad verschlechtert.

Beim Ansatz der anderen Kontaktfläche an die Rohrleitung stehen zwar die achsparallen Zylinderflächen überwiegend im Wärmeaustausch mit der Rohrleitung, was wärmetechnisch günstig ist, jedoch verläuft hierbei der steife Schlauch mit seiner starren Anschlußarmatur parallel zur Rohrleitung, so daß diese Einsatzart in vielen Fällen nicht möglich ist.

Auch besitzt der bekannte Kontaktkörper kein integriertes Befestigungsmittel für die Anbringung an der Rohrleitung. Es müßte also eine Schraubzwinge o. dgl. verwendet werden, die aber geichfalls sperrig ist.

Außerdem muß bei der bekannten Lösung ein gesonderter Wärmefühler verwendet werden, um den Einfrierzustand erfassen zu können. Eine Oberflächentemperatur der Rohrleitung von etwa minus 20 Grad gilt als sicheres Maß für einen zuverlässigen Verschluß der Rohrleitung durch einen Eispfropfen. Nun läßt sich aber ein gesonderter Temperaturfühler ausgerechnet nicht im Bereich des Kontaktkörpers anbringen bzw. befestigen.

Der Erfindung liegt daher die Aufgabe zugrunde, eine Einfriervorrichtung der eingangs beschriebenen Gattung dahingehend zu verbessern, daß der Kontaktkörper ohne Behinderung durch den Schlauch in beliebigen Raumlagen auch an kurzen Leitungsabschnitten angebracht werden kann, einen besseren thermischen Wirkungsgrad besitzt und eine Temperaturmessung unmittelbar an der Einfrierstelle ermöglicht, um Energie zu sparen.

Die Lösung der gestellten Aufgabe erfolgt bei der eingangs angegeben Einfriervorrichtung erfindungsgemäß dadurch, daß
a) der Schlauch mit der in ihm geführten Kapillarleitung in Normalenrichtung zu einer Mantellinie der Kontaktfläche an einer Anschlußstelle an den Kontaktkörper angeschlossen ist, und daß
b) der Kontaktkörper seitlich der Kontaktfläche einen Fortsatz aufweist, in dem zur Befestigung des Kontaktkörpers an der Rohrleitung eine Klemmspindel gelagert ist, die einen Temperaturfühler enthält, der durch den Klemmvorgang auf der der Anschlußstelle gegenüberliegenden Seite des Kontaktkörpers mit der Rohrleitung in Wärmekontakt bringbar ist.

Mit einer solchen Lösung sind folgende Vorteile verbunden:

Beim Ansetzen des Kontaktkörpers an eine Rohrleitung verläuft der Schlauch nicht parallel zur Rohrleitung, sondern steht senkrecht von ihr ab, hängt also beim Ansetzen an eine waagrechte Rohrleitung nach unten, so daß der Kontaktkörper an extrem kurze, freiliegende Rohrabschnitte angesetzt werden kann. Dennoch verlaufen die langgestreckten Expansionskammern nahezu über den gesamten Querschnitt des Kontaktkörpers und in kleinstmöglichem Abstand zur einzufrierenden Rohrleitung, nehmen also deren Wärme über den größten Teil der Mantelflächen der Expansionskammern auf.

Umgekehrt wird dadurch die Aufnahme von Wärme aus der Umgebungsluft vermindert. Dadurch steigt der thermische Wirkungsgrad, und die lohnintensiven Einfrierzeiten werden entsprechend verringert. Zusätzlich läßt sich an den Kontaktkörper wegen der besseren Wärmeübertragung ein leistungsstärkeres Kälteaggregat anschließen, wodurch die Einfrierzeiten weiter verringert werden.

Durch die Integration des Temperaturfühlers in die Klemmspindel wird der Temperaturfühler mit großer Kraft an die Rohrleitung angepreßt, und zwar unmittelbar im Bereich der Einfrierstelle, so daß das Erreichen des Verschlußzustandes früher erfaßt wird. Dadurch wird nicht nur eine größere Sicherheit, sondern vor allem eine nochmals verkürzte Einfrierdauer erreicht.

Die Bedienungsperson benötigt keine zusätzliche Schraubzwinge, sondern der Kontaktkörper wird mittels der integrierten Klemmspindel zuverlässig an der Rohrleitung befestigt, und zwar mit entsprechend hoher Anpreßkraft und gutem Wärmeübergang. Insgesamt lassen sich dadurch Lohn- und Energiekosten in beträchtlichem Umfange einsparen.

Die einzelnen Wirkungen durchdringen und fördern sich dabei im Sinne eines synergistischen Effektes. Es ist dabei besonders vorteilhaft, wenn entweder einzeln oder in Kombination:
a) eine Verstellachse der Klemmspindel auf die Achse der Kontaktfläche ausgerichtet ist,
b) die Klemmspindel aus einem wärmeisolierenden Werkstoff besteht,
c) die Klemmspindel im Innern einen koaxialen Wärmeleitkörper aufweist, in den der Temperaturfühler einsteckbar ist,
d) eine elektrische Anschlußleitung des Temperaturfühlers am Schlauch entlang geführt ist,
e) der Schlauch in Längsrichtung von einer flexiblen Hülle umgeben ist, die die elektrische Anschlußleitung des Temperaturfühlers am Schlauch hält,
f) die flexible Hülle aus einem in Längsrichtung geschlitzten Wellschlauch besteht,
g) die flexible Hülle in Abständen von vorgespannten elastomeren Ringen umgeben ist,
h) der Kontaktkörper einschließlich seines Fortsatzes für die Klemmspindel aus einem Metall-Strangprofil besteht,
i) zwei Expansionskammern zumindest im wesentlichen senkrecht zueinander verlaufen, ineinander einmünden, um eine Bohrung herumgeführt sind, in die das Ende des Schlauches mittels einer Armatur eingesetzt ist, und wenn diese Bohrung mittels einer Schrägbohrung mit einer der Expansionskammern verbunden ist, wobei die Kapillarleitung durch die Schrägbohrung hindurchgeführt ist,
j) die Schrägbohrung im wesentlichen tangential in die eine Expansionskammer einmündet.

Durch a) wird erreicht, daß die Klemmkraft und die Klemmwirkung unabhängig vom Durchmesser der einzufrierenden Rohrleitung sind, d.h. unabhängig davon, ob der Kontaktkörper mit oder ohne einen halbzylindrischen Adapter verwendet wird,
b) ermöglicht eine saubere thermische Trennung des Temperaturfühlers gegenüber Einflüssen der Umgebungsluft und eine sehr wirksame thermische Entkopplung vom Kontaktkörper und Temperaturfühler,
c) ermöglicht das leichte Auswechseln des Temperaturfühlers und sorgt dafür, daß der Temperaturfühler und die Anschlußleitung bein Anziehen der Klemmspindel nicht mit verdreht werden müssen,
i) ermöglicht eine starke Vergrößerung der Innenflächen der Expansionskammern, die im Wärmeaustausch mit dem Kältemittel stehen, sowie eine Verbilligung der Herstellung, indem nämlich nur zwei Verschlußstopfen bzw. Schraubdeckel vorgesehen und gegenüber der Atmosphäre abgedichtet werden müssen, und
j) ermöglicht die Einbringung der Schrägbohrung durch das Ende der einen Expansionskammer, wodurch ein dritter Schraubdeckel entbehrlich wird.

Ein Ausführungsbeispiel des Erfindungsgegenstandes wird nachfolgend anhand der Figuren 1 bis 3 näher erläutert.

Es zeigen:
- Figur 1: eine stirnseitige Ansicht des Kontaktkörpers, teilweise aufgebrochen entlang der Linie I-I in Figur 3, und
- Figur 2: eine Seitenansicht des Gegenstandes nach Figur 1 in Richtung des Pfeils II, und
- Figur 3: einen Schnitt durch den Kontaktkörper entlang der Linie III-III in Figur 1

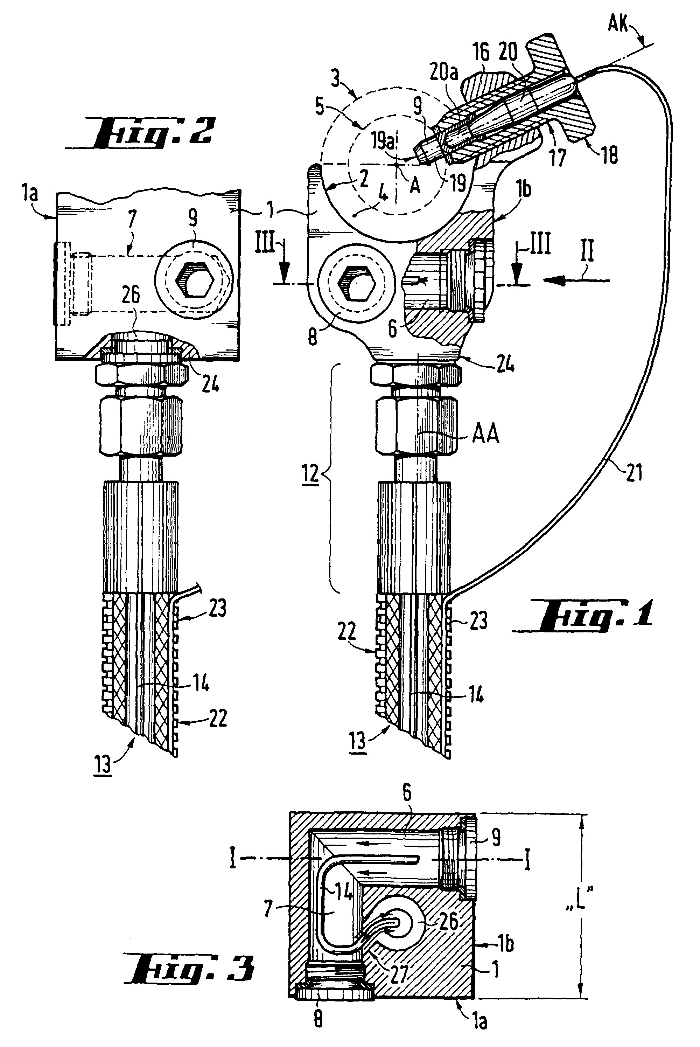

In den Figuren 1, 2 und 3 ist ein Kontaktkörper 1 dargestellt, der aus einem Abschnitt mit der Länge "L" eines Leichtmetall-Strangprofils besteht. Der Kontaktkörper 1 besitzt eine halbzylindrische Kontaktfläche 2 mit einer Achse "A" für die Aufnahme eines Rohres 3 maximalen Durchmessers oder eines Adapters 4 mit einem Rohr 5 mit einem geringeren Durchmesser.

In dem Kontaktkörper 1 sind mit geringem Abstand von der Kontaktfläche 2 zwei großvolumige Expansionskammern 6 und 7 angeordnet, die als Zylinderbohrungen ausgeführt sind und ineinander einmünden. Sie sind auf verschiedenen, zueinander rechtwinklig stehenden, Seiten 1a und 1b des Kontaktkörpers 1 durch Schraubdeckel 8 und 9 verschlossen. Die Achsen der Expansionskammern 6 und 7 verlaufen rechtwinklig zueinander, wobei die Expansionskammer 7 parallel und die Expansionskammer 6 senkrecht zur Achse "A" verläuft. Ein besonders zu bohrender und zu verschießender Verbindungskanal ist nicht vorhanden. Die Expansionskammern 6 und 7 sind strömungstechnisch in Reihe geschaltet.

An den Kontaktkörper 1 ist mittels einer Armatur 12 ein kältefester Schlauch 13 angeschlossen, der zur Rückleitung des verdampften Kältemittels dient und in seinem Innern eine Kapillarleitung 14 für die Zufuhr des flüssigen Kältemittels enthält. Die Achse der Anschlußstelle 24 mit einer Bohrung 26 für das Einschrauben der Armatur 12 liegt nicht allzu weit entfernt von der Längsmitte des Kontaktkörpers 1 und etwas seitlich versetzt zur Achse "A" der Kontaktfläche 2. Wie ersichtlich sind die Expansionskammern 6 und 7 im rechten Winkel um die Bohrung 26 herumgeführt. Eine Schrägbohrung 27, die das Gewinde des Schraubdeckels 8 nicht anschneidet, mündet einerseits unter einem Winkel von etwa 45° in die Expansionskammer 7 und andererseits tangential in die Bohrung 26.

Durch die Schrägbohrung 27 ist die Kapillarleitung 14 aus dem Schlauch 13 in die Expansionskammer 7 und schließlich bis an das deckelseitige Ende der Expansionskammer 6 geführt. Dadurch bildet sich in den Expansionskammern 6 und 7 und in der Schrägbohrung 27 eine Rückströmung von Kältemittel in Richtung der eingezeichneten Strömungspfeile aus, und zwar vom zunächst flüssigen bis zum rein dampfförmigen Zustand, wobei laufend Wärme aus dem Kontaktkörper 1 über die Wandungen der Expansionskammern 6 und 7 und der Schrägbohrung 27 abgezogen wird, die einen gewissen Drosseleffekt bewirkt.

Seitlich der Kontaktfläche 2 besitzt der Kontaktkörper 1, einstückig angeformt, einen Fortsatz 16 mit einem Innengewinde, in das eine hohle Klemmspindel 17 aus Kunststoff mit einer Griffläche 18 und einem komplementären Außengewinde eingesetzt ist. Deren Verstellachse "AK" verläuft radial zur Achse "A" der Kontaktfläche 2, und zwar derart, daß die Wirkungsrichtung der Klemmspindel 17 auf die Kontaktfläche 2 ausgerichtet ist.

Zum Gebrauch muß die Klemmspindel 17 weiter aus ihrem Gegengewinde herausgeschraubt werden, als dies in Figur 1 dargestellt ist.

Im Innern der Klemmspindel 17 befindet sich ein metallischer, hülsenförmiger Wärmeleitkörper 19, der mit seinem geschlossenen Ende 19a aus der Klemmspindel 17 herausragt und in den ein Temperaturfühler 20 mit seinem verjüngten Ende 20a eingesteckt ist. Die Achse "AK" liegt in Längsmitte des Kontaktkörpers 1. Jegliche Zugkraft am Schlauch 13 wird also von der Klemmspindel 17 auf kürzestem Wege aufgefangen.

Die Achse "AA" der Armatur 12 bzw. des Schlauchs 13 verläuft senkrecht zu einer Mantellinie der Kontaktfläche 2. Vom Temperaturfühler 20, verläuft eine Anschlußleitung 21 zum Schlauch 13, an dem sie entlang geführt ist. Zu diesem Zweck und zur weiteren Verbesserung der Wärmeisolation ist der Schlauch 13 von einer flexiblen Hülle 22 umgeben, die als Wellschlauch ausgeführt ist, aus Kunststoff besteht und in Längsrichtung geschlitzt ist, um die Anschlußleitung 21 ggf. auswechseln zu können. Die geschlitzte Hülle 22 wird durch elastomere Ringe 23 zusammengehalten.

Der Schlauch 13 und die Kapillarleitung 14 sind mit ihren anderen Enden an ein bekanntes Kälteaggregat angeschlossen, das hier nicht dargestellt ist und mit den bisher beschriebenen Elementen die Einfriervorrichtung bildet.

## Patentansprüche

1. Einfriervorrichtung für flüssigkeitsgefüllte Rohrleitungen (3, 5) mittels eines in einem Kreislauf geführten verdampfbaren Kältemittels mit einem Kontaktkörper (1), der eine teilzylindrische Kontaktfläche (2) für die Rohrleitung (3, 5) oder für einen Adapter (4) und strömungstechnisch in Reihe geschaltete Expansionskammern (6, 7) für die Verdampfung des Kältemittels aufweist, wobei ein Schlauch (13) für die Abfuhr des verdampften Kältemittels an den Kontaktkörper (1) angeschlossen ist und wobei eine Kapillarleitung (14) für die Zufuhr flüssigen Kältemittels durch den Schlauch (13) in den Kontaktkörper geführt ist, **dadurch gekennzeichnet,** daß
a) der Schlauch (13) mit der in ihm geführten Kapillarleitung (14) in Normalenrichtung zu einer Mantellinie der Kontaktfläche (2) an einer Anschlußstelle (24) an den Kontaktkörper (1) angeschlossen ist, und daß
b) der Kontaktkörper (1) seitlich der Kontaktfläche (2) einen Fortsatz (16) aufweist, in dem zur Befestigung des Kontaktkörpers (1) an der Rohrleitung (3, 5) eine Klemmspindel (17) gelagert ist, die einen Temperaturfühler (20, 20a) enthält, der durch den Klemmvorgang auf der der Anschlußstelle (24) gegenüberliegenden Seite des Kontaktkörpers (1) mit der Rohrleitung (3, 5) in Wärmekontakt bringbar ist.

2. Einfriervorrichtung nach Anspruch 1, **dadurch gekennzeichnet**, daß eine Verstellachse (AK-AK) der Klemmspindel (17) auf die Achse (A) der Kontaktfläche (2) ausgerichtet ist.

3. Einfriervorrichtung nach Anspruch 1, **dadurch gekennzeichnet,** daß die Klemmspindel (17) aus einem wärmeisolierenden Werkstoff besteht.

4. Einfriervorrichtung nach Anspruch 1, **dadurch gekennzeichnet,** daß die Klemmspindel (17) im Innern einen koaxialen Wärmeleitkörper (19) aufweist, in den der Temperaturfühler (20, 20a) einsteckbar ist.

5. Einfriervorrichtung nach Anspruch 1, **dadurch gekennzeichnet,** daß eine elektrische Anschlußleitung (21) des Temperaturfühlers (20, 20a) am Schlauch (13) entlang geführt ist.

6. Einfriervorrichtung nach Anspruch 5, **dadurch gekennzeichnet**, daß der Schlauch (13) in Längsrichtung von einer flexiblen Hülle (22) umgeben ist, die die elektrische Anschlußleitung (21) des Temperaturfühlers (20, 20a) am Schlauch (13) hält.

7. Einfriervorrichtung nach Anspruch 6, **dadurch gekennzeichnet,** daß die flexible Hülle (22) aus einem in Längsrichtung geschlitzten Wellschlauch besteht.

8. Einfriervorrichtung nach Anspruch 6, **dadurch gekennzeichnet,** daß die flexible Hülle (22) in Abständen von vorgespannten elastomeren Ringen (23) umgeben ist.

9. Einfriervorrichtung nach Anspruch 1, **dadurch gekennzeichnet,** daß der Kontaktkörper (1) einschließlich seines Fortsatzes (16) für die Klemmspindel (17) aus einem Metall-Strangprofil besteht.

10. Einfriervorrichtung nach Anspruch 1, **dadurch gekennzeichnet,** daß zwei Expansionskammern (6,7) zumindest im wesentlichen senkrecht zueinander verlaufen, ineinander einmünden, um eine Bohrung (26) herumgeführt sind, in die das Ende des Schlauches mittels einer Armatur (12) eingesetzt ist, und daß diese Bohrung (26) mittels einer Schrägbohrung (27) mit einer der Expansionskammern (6, 7) verbunden ist, wobei die Kapillarleitung (14) durch die Schrägbohrung (27) hindurchgeführt ist.

11. Einfriervorrichtung nach Anspruch 10, **dadurch gekennzeichnet,** daß die Schrägbohrung im wesentlichen tangential in die eine Expansionskammer (6, 7) einmündet.

## Claims

1. Freezing device for pipes filled with fluid (3, 5) by means of a circulated vaporizable refrigerant, with a contact body (1) which has a contact surface (2) in the form of a reference cylinder for the pipe (3, 5) or for an adaptor (4), and expansion chambers (6, 7) which are connected in series in fluidic terms for the evaporation of the refrigerant, whereby a tube (13) is connected to the contact body (1) for the removal of the evaporated refrigerant, and whereby a capillary tube (14) to feed in the liquid refrigerant is led through the tube (13) into the contact body,
in which
a) the tube (13), together with the capillary tube (14) inside it, is connected - vertically to a surface line of the contact surface (2) - to the contact body (1) at a junction point (24), and in which
b) the contact body (1) has - laterally to the contact surface (2) - an extension (16), in which is fixed a clamping spindle (17) to secure the contact body (1) to the pipe (3, 5); this clamping spindle incorporates a temperature sensor (20, 20a), which can be brought into thermal contact with the pipe (3, 5) by its clamping action on the side of the contact body (1) opposite to the junction point (24).

2. Freezing device as in Claim 1, in which an adjusting axis (AK - AK) of the clamping spindle (17) is aligned with the axis (A) of the contact surface (2).

3. Freezing device as in Claim 1, in which the clamping spindle (17) is made from a material with thermal insulation properties.

4. Freezing device as in Claim 1, in which the clamping spindle (17) has inside it a coaxial heat conductor (19), into which the temperature sensor (20, 20a) can be inserted.

5. Freezing device as in Claim 1, in which an electrical connection line (21) from the temperature sensor (20, 20a) is led along the tube (13).

6. Freezing device as in Claim 5, in which the tube (13) is surrounded along its length by a flexible casing (22) which holds the electrical connection line (21) of the temperature sensor (20, 20a) against the tube (13).

7. Freezing device as in Claim 6, in which the flexible casing (22) consists of corrugated hose which is slit along its length.

8. Freezing device as in Claim 6, in which the flexible casing (22) is encircled at intervals by prestressed elastomeric rings (23).

9. Freezing device as in Claim 1, in which the contact body (1), including its extension (16) for the clamping spindle (17) consists of an extruded metal section.

10. Freezing device as in Claim 1, in which two expansion chambers (6, 7) lie in principle perpendicular to each other, open out into each other and are led around a bore (26) into which the end of the tube is fitted by means of a mounting (12); and in which this bore (26) is linked, by means of a diagonal bore (27), with one of the expansion chambers (6, 7), whereby the capillary tube (14) is fed through the diagonal bore (27).

11. Freezing device as in Claim 10, in which the diagonal bore opens out in principle tangentially into one expansion chamber (6, 7).

## Revendications

1. Dispositif de congélation pour canalisations (3, 5) remplies d'un fluide, au moyen d'un réfrigérant évaporable entraîné en circuit fermé, muni d'un corps de contact (1) qui présente une surface de contact (2) partiellement cylindrique pour la canalisation (3, 5) ou pour un adaptateur (4) et des chambres d'expansion (6, 7) montées en série sur le plan hydraulique et destinées à la vaporisation du réfrigérant, un tuyau (13) pour l'évacuation du réfrigérant vaporisé étant connecté au corps de contact (1) et un conduit capillaire (14) pour l'introduction du réfrigérant fluide étant mené à travers le tuyau jusque dans le corps de contact, caractérisé en ce que:
a) le tuyau (13), avec le conduit capillaire (14) guidé intérieurement dans lui-même, est connecté selon une direction perpendiculaire à une génératrice de la surface de contact (2) à un emplacement de connexion (24) sur le corps de contact (1), et
b) le corps de contact (1) présente, latéralement par rapport à la surface de contact (2), un prolongement (16), dans lequel repose un noyau de serrage (17) destiné à fixer le corps de contact (1) à la canalisation (3, 5), et qui contient un détecteur de température (20, 20a) qui peut être amené en contact thermique avec la canalisation (3, 5) par serrage sur le côté du corps de contact (1) opposé à l'emplacement de connexion (24).

2. Dispositif de congélation selon la revendication 1, caractérisé en ce qu'un axe de réglage (AK-AK) du noyau de serrage (17) est pointé vers l'axe (A) de la surface de contact (2).

3. Dispositif de congélation selon la revendication 1, caractérisé en ce que le noyau de serrage (17) est réalisé en matériau calorifuge.

4. Dispositif de congélation selon la revendication 1, caractérisé en ce que le noyau de serrage (17) présente à l'intérieur un corps coaxial (19) conducteur de la chaleur, dans lequel le détecteur de température (20, 20a) est enfichable.

5. Dispositif de congélation selon la revendication 1, caractérisé en ce qu'un conducteur électrique de raccordement (21) du détecteur de température (20, 20a) est guidé le long du tuyau (13).

6. Dispositif de congélation selon la revendication 5, caractérisé en ce que le tuyau (13) est entouré, dans le sens de sa longueur, d'une gaine flexible (22), qui maintient le conducteur électrique (21) de raccordement du détecteur de température (20, 20a) contre le tuyau (13).

7. Dispositif de congélation selon la revendication 6, caractérisé en ce que la gaine flexible (22) est constituée d'un tuyau ondulé entaillé dans le sens de la longueur.

8. Dispositif de congélation selon la revendication 6, caractérisé en ce que la gaine flexible (22) est entourée, à intervalles, d'anneaux précontraints (23) en élastomère.

9. Dispositif de congélation selon la revendication 1, caractérisé en ce que le corps de contact (1), y compris son prolongement (16) pour le noyau (17), consiste en un profilé allongé en métal.

10. Dispositif de congélation selon la revendication 1, caractérisé en ce que deux chambres d'expansion (6, 7) s'étendent, au moins pour l'essentiel, perpendiculairement l'une à l'autre, débouchent l'une dans l'autre, sont disposées autour d'un alésage (26), dans lequel l'extrémité du tuyau est emboîtée au moyen d'un raccord (12), et en ce que cet alésage (26) est connecté à l'une des chambres d'expansion (6, 7) au moyen d'un alésage oblique (27), le conduit capillaire (14) étant guidé à travers l'alésage (27).

11. Dispositif de congélation selon la revendication 10, caractérisé en ce que l'alésage oblique débouche de manière sensiblement tangentielle dans l'une des chambres d'expansion (6, 7).
